# EUROPÄISCHE PATENTSCHRIFT

(11) **EP 2 430 128 B1**
(45) Veröffentlichungstag und Bekanntmachung des Hinweises auf die Patenterteilung: **28.12.2016**
(21) Anmeldenummer: 10725378.3
(22) Anmeldetag: 11.05.2010
(51) Int. Cl.: C10J 3/57, B01J 19/24, B01J 4/00

(54) **VERFAHREN UND ANLAGE MIT EINEM SCHMELZBAD ZUR DURCHFÜHRUNG CHEMISCHER PROZESSE**
METHOD AND SYSTEM FOR PERFORMING CHEMICAL PROCESSES
PROCÉDÉ ET INSTALLATION POUR LA MISE EN OEUVRE DE PROCESSUS CHIMIQUES

(30) Priorität: 14.05.2009 PL 38802809
(43) Veröffentlichungstag der Anmeldung: 21.03.2012
(73) Patentinhaber: Handerek, Adam, 43-300 Bielsko-Biala (PL); Schlüter, Hartwig, 34260 Kaufungen (DE)
(72) Erfinder: HANDEREK, Adam, 43-300 Bielsko-Biala (PL)
(74) Vertreter: Lins, Edgar
(86) Internationale Anmeldenummer: PCT/EP2010/002877
(87) Internationale Veröffentlichungsnummer: WO 2010/130404

(56) Entgegenhaltungen:
- EP-A1- 1 840 191
- WO-A1-2009/006711
- DE-A1- 2 834 173
- US-A- 5 436 210

## Beschreibung

Die Erfindung betrifft ein Verfahren zur Deplymerisation von Kunststoffabfallprodukten, bei dem Einsatzstoffe erhitzt werden, wobei mit aufgeheizten, niedrigschmelzenden Metallen oder Metalllegierungen ein Schmelzbad in einem Tank oder Reaktor hergestellt wird. Die Erfindung betrifft ferner eine Anlage für die thermokatalytische Depolymerisation von Kunststoffabfallprodukten, mit einem Tank oder Reaktor zur Umfassung eines Schmelzbads aus einem niedrigschmelzendem Metall oder einer niedrigschmelzenden Metalllegierung.

In der polnischen Patentanmeldung P-372777 wurde ein Reaktor zur Durchführung thermischer Depolymerisationsverfahren von Kunststoffabfallprodukten vorgestellt. Ausgestattet ist dieser mit einem Turborührer sowie einem Satz von Röhrenvorwärmern, die abwechselnd in einem langen, engen und flachen Kasten untergebracht sind und sich unter der Oberfläche des geschmolzenen Materials befinden. Die Erhitzer werden vorzugsweise mit niedrigschmelzendem Metall beschickt, z. B. mit Woodscher Legierung. Zwischen den Mischern und dem Vorheizer sind senkrechte Sperrwände angebracht, die den longitudinalen Durchfluss durch den Vorheizer gewährleisten.

Bei dem beschriebenen Vorgang kann es zu einer Überhitzung der geschmolzenen Materialien kommen, wodurch auf Teilen der Anlage schwer entfernbare Karbonisationsablagerungen entstehen. Darüber hinaus ist während des chemischen Prozesses ein intensiver Rührvorgang erforderlich.

Der Erfindung liegt die Aufgabe zugrunde, die Durchführung der erwähnten chemischen Prozesse einfacher und ohne die Gefahr von Überhitzungen und Ablagerungen zu ermöglichen.

Diese Aufgabe wird erfindungsgemäß mit einem Verfahren der eingangs erwähnten Art dadurch gelöst, dass die Einsatzstoffe als feste Materialien im unteren Teil des Tanks oder Reaktors direkt in das Bad eindosiert werden, wobei der automatische Fluss des Einsatzstoffes durch das Schmelzbad durch Sperrwände, spiralförmige Leitrohre oder durch Gitter verlangsamt wird, und wobei das Schutzbad eine Temperatur zwischen 50°C und 550°C aufweist.

Die niedrigschmelzenden Metalle oder Metalllegierungen werden über zumindest eine, vorzugsweise elektrische, Heizeinrichtung erhitzt, entweder direkt im Tank oder Reaktor oder in einem gesonderten Behälter, sodass die geschmolzene Legierung dem Tank oder Reaktor zugeführt wird.

Die zugeführten Einsatzstoffe werden als feste Materialien in das Schmelzbad dosiert eingeführt, Da die Einsatzstoffe vorzugsweise eine geringere Dichte aufweisen als das Schmelzbad, bewegen sie sich automatisch durch das Schmelzbad nach oben, wobei der gewünschte chemische Prozess abläuft. Das automatische Aufsteigen des Einsatzstoffes nach der dosierten Zuführung kann durch Sperrwände, spiralförmige Leitrohre oder durch Gitter im Schmelzbad verlangsamt werden.

Die oben erwähnte Aufgabe wird ferner gelöst durch eine Anlage der eingangs erwähnten Art, die dadurch gekennzeichnet ist, dass der Tank oder Reaktor in seinem unteren Teil mit einer Zuführeinrichtung zur dosierten Zuführung von Einsatzstoffen in Form von festen Materialien direkt in das Schmelzbad versehen ist, und dadurch, dass der Reaktor mit verlangsamenden Sperren, Gittern beziehungsweise Sieben oder spiralförmigen Leitrohren versehen ist.

Für die Feststoffe erfolgt die Dosierung beispielsweise mit einer Dosierförderschnecke.

Der Tank oder Reaktor kann im unteren Teil mit einem Heizelement ausgestattet sein, vorzugsweise mit einer elektrischen Heizvorrichtung und insbesondere bevorzugt mit einer Induktionsheizung. Die Induktionsheizung kann sich dabei zylindrisch um den Mantel des Reaktors oder Tanks erstrecken. Die Induktion erfolgt vorzugsweise mit einer niedrigen Frequenz, um Skineffekte zu vermeiden. Diese Anordnung hat den Vorteil, dass das gesamte Schmelzbad über das gesamte Volumen gleichmäßig erhitzt wird, sodass die Aufheizung nicht nur von unten erfolgt. Alternativ kann dem Tank oder Reaktor das in einem gesonderten Behälter erhitzte niedrigschmelzende Metall oder die erhitzte niedrigschmelzende Metallegierung zugeführt werden.

Ferner kann der Tank oder der Reaktor mit Sperrwänden, spiralförmigen Leitrohren oder Sieben zur Verlangsamung des Aufsteigens der Einsatzstoffe versehen sein.

Der erfindungsgemäße Prozess ermöglicht ein sehr effektives und leistungsfähiges Erhitzen von im Prozess verwendeten Einsatzstoffen, Substraten und Reaktanden. Die sich absondernden Schmutzstoffe und Ablagerungen, wie Karbonisat, können leicht entfernt werden. Diese setzen sich an der Oberfläche des geschmolzenen Metalls oder der Metalllegierung ab oder sie lassen sich mit Lösungsmittel oder Wasser herausspülen. Das Reinigen des geschmolzenen Metalls kann bei erhöhten Temperaturen im flüssigen Zustand durchgeführt werden, indem man durch die aus dem Tank oder dem Reaktor abgelassene Legierung Wasser durchlaufen lässt.

Ein Beispiel für einen Prozess, der nach dem Verfahren gemäß der Erfindung durchgeführt werden kann, stellt die thermokatalytische Depolymerisation von Kunststoffabfallprodukten, z. B. polyolefine Kunststoffe, dar. Bei diesen Verfahren wurden bisher Heizelemente eingesetzt, die direkt oder über die Wand des erhitzen Reaktors mit den erhitzten Flüssigkeiten in Berührung kommen. Dies hat zur Folge, dass sich auf den überhitzten Elementen der Anlage Verunreinigungen in Form von Karbonisat absetzen. Selbst jedwede Verbesserung des Mischvorganges während des Arbeitsprozesses ermöglicht es nicht zu verhindern, dass sich Karbonisat auf den erhitzten Flächen absetzt. Somit waren vorübergehende Arbeitspausen erforderlich, in denen die Anlage gereinigt werden musste.

Das Verfahren kann entsprechend der Erfindung eine beliebige Phase des chemischen Verfahrens umfassen, wie z. B. das Vorreinigen von Substanzen, ihre Zerkleinerung, ihre Plastifizierung in Schmelzöfen, die Überführung von Festrohstoffen in den flüssigen Zustand, die Beseitigung aller Arten von Fraktionen, die ein Haupt- oder Nebenprodukt darstellen, die Rückführung von Lösungsstoffen und anderen am chemischen Prozess beteiligten Substanzen sowie die Phasen der Zugabe von Katalysatoren und die Ableitung deren verbrauchter Fraktionen. Auf dieselbe Weise umfasst die Anlage entsprechend der Erfindung typengerechte Sektionen zur Durchführung der o. g. Phasen. Diese Phasen sind typengerecht und allgemein bekannt. Die Erfindung befasst sich mit der Verbesserung der Erhitzung der Erhitzungsphase im Rahmen der bekannten Verfahren und die Verbesserung der herkömmlichen Anlagen durch die Einführung eines neuen Erhitzungsverfahrens. Die Temperaturen, die bei dem Verfahren gemäß der Erfindung verwendet werden können, liegen im Bereich von 50°C bis 1000°C oder von 50°C bis 550°C.

Erfindungsgemäß wird ein flüssiger (geschmolzener) Zustand des aufgeheizten Metalls oder der aufgeheizten Metalllegierung verwendet. In einem zylindrischen Behälter beispielsweise mit kegelförmigem Boden kann sich im unteren Teil ein Heizelement, in der Regel ein elektrisches Heizelement, befinden, das die niedrigschmelzende Legierung erhitzt. Alternativ kann eine sich zylindrisch über die Höhe der Wandung erstreckende Heizung, insbesondere eine elektrische Heizung und vorzugsweise eine Induktionsheizung verwendet werden, die zylindrisch um den Mantel des Tanks oder Reaktors angeordnet ist und den Vorteil bietet, das gesamte Volumen des Metalls oder der Metalllegierung gleichmäßig oder mit einem definierten Temperaturgradienten erhitzen zu können.

Im unteren Teil des Behälters befindet sich eine Zuführeinrichtung, durch die das Einsatzmaterial in den Behälter eingeleitet wird.

Die Dichte des Einsatzmaterials ist weitaus geringer als die Dichte der Legierung. Daher kann es zweckmäßig sein, in dem Tank Sperren einzusetzen, um die Erhitzungszeit für das Einsatzmaterial zu verlängern, also den Durchlauf der Substanzen durch die Legierung zu verlangsamen. Die Dauer des chemischen Prozesses unter der erhöhten Temperatur wird nicht allein über die entsprechende Temperaturwahl bestimmt, sondern auch über die Höhe der Säule des geschmolzenen Metalls, die Art der verwendeten Sperren, die Abmessungen der Düsenöffnungen sowie die Menge der in einer bestimmten Zeiteinheit zugegebenen Substanz.

Die Erfindung ermöglicht mit Vorteil die Zuführung fester Materialien. So ist es beispielsweise möglich, mit Öl kontaminierten Sand erfindungsgemäß zu reinigen. Der Sand unterstützt dabei katalytisch die Depolymerisation des Öls, sodass eine Schmelzbadtemperatur von beispielsweise 450°C ausreicht, um das Öl zu depolymerisieren und ggf. in Brauchfraktionen sowie der verwendbaren Stoffen umzuwandeln. Die Sandkörner sammeln sich in trockener Form an der Oberfläche des Schmelzbades und können von dort in einfacher Weise entfernt werden, beispielsweise durch Abblasen mit einem sauerstofffreien Gasstrom.

Ein weiteres Anwendungsbeispiel für einen erfindungsgemäßen chemischen Prozess mit festen Einsatzstoffen ist die Trennung von Kunststoff und Aluminium, die fest miteinander verbundene Materialien sein können. Diese Materialien werden in gemahlener Form über eine Schleuse, beispielsweise mit einem Schieber dosiert in das Schmelzbad eingeleitet. Der Kunststoff kann dabei depolymerisieren und in gasförmiger Form abgeleitet werden, während sich das Aluminium in fester Form an der Oberfläche des Schmelzbades ansammelt und abgenommen werden kann, beispielsweise durch Absaugen.

Das erfindungsgemäße Verfahren kann auch bei Zuführung von Kunststoffteilen in einem Temperaturbereich betrieben werden, in dem der Kunststoff noch nicht depolymerisiert. In diesem Fall kann der Kunststoff in flüssiger Form an der Oberfläche des Schmelzbades abgenommen werden.

Sofern die Vermischung der Einsatzstoffe mit dem Schmelzbad nicht in ausreichender Form selbsttätig geschieht, kann eine Rührvorrichtung vorgesehen sein. Bevorzugt ist jedoch, in diesem Fall einen Rühreffekt durch über Düsen eingepresste Gasbläschen hervorzurufen. Die Gasbläschen werden dabei vorzugsweise durch Prozessgase gebildet, die bei den auftretenden Prozesstemperaturen in der Anlage nicht kondensieren und somit im Kreislauf geführt werden können. Sofern es sinnvoll erscheint, Kohlenwasserstoffe aus der Anlage auszutreiben, kann auf diesem Wege eine Spülung, beispielsweise mit CO2, erfolgen.

Das erfindungsgemäße Verfahren eignet sich auch für eine sehr effektive Trocknung von Feststoffen, beispielsweise Matsch. In diesem Fall kann der getrocknete Sand an der Oberfläche des Schmelzbades in einfacher Form abgenommen werden.

Insbesondere bei der Verwendung einer zylindrisch in oder an der Wandung ausgebildeten Heizung, beispielsweise einer Induktionsheizung kann es sinnvoll sein, im Tank oder Reaktor einen Temperaturgradienten im Schmelzbad herzustellen, um beispielsweise auf Kunststoffteilchen kontrolliert einwirken zu können.
Ferner ist es möglich, kompliziertere Reaktionen durch Hintereinanderschaltung von mehreren Tanks oder Reaktoren mit unterschiedlichen Temperaturen der Schmelzbäder auszuführen. Auf diese Weise können beispielsweise Gemische von Wasser, Glykol und Methanol voneinander getrennt werden. In einem ersten Reaktor kann das Schmelzbad beispielsweise eine Temperatur von 72°C aufweisen, wodurch Methanol verdampft und die Mischung von Glykol und Wasser von der Oberfläche des Schmelzbades entnommen werden, Im zweiten Reaktor kann dann eine Schmelzbadtemperatur von 86°C eingestellt werden, wodurch das Glykol verdampft und von der Oberfläche des Schmelzbades reines Wasser abgezogen werden kann.

Neben der Temperatursteuerung ist die Steuerung der Verweilzeit der Einsatzstoffe in dem Schmelzbad von Bedeutung. In vielen Fällen ist die Verwendung von Sieben unterschiedlicher Maschenweiten vorteilhaft, um die Verweilzeit kontrollieren zu können. Die Siebe können dabei regelmäßig Maschenweiten zwischen 0,1 mm und 2 mm aufweisen. Dies ist insbesondere vorteilhaft für die Behandlung von in das Schmelzbad eingebrachten Feststoffteilchen, die im Schmelzbad langsam schmelzen. Durch die Verwendung von Sieben mit abnehmenden Maschenweiten kann sichergestellt werden, dass die Feststoffteilchen jeweils um eine Stufe nach oben erst dann wandern können, wenn sie sich soweit durch Schmelzvorgänge verkleinert haben, dass sie durch die Maschenweite des jeweiligen Siebs hindurchpassen. Die Teilchen bleiben an den jeweiligen Sieben daher solange hängen, bis sie durch weiteres Schmelzen durch die Maschen des Siebs hindurchwandern können, um dann zum nächsten Sieb mit kleinerer Maschenweite oder - in geschmolzener Form - an die Oberfläche des Schmelzbades zu gelangen.

Bei dem erfindungsgemäßen Verfahren können verschiedene niedrigschmelzende Metalle und Legierungen verwenden werden, z. B. Legierungen mit Gallium und Indium (Schmelztemperatur 47°C), Woodsche Legierung (Schmelz-temperatur 70°C), Lipowitz-Legierung (Schmelztemperatur 80°C), Newton-Legierung (Schmelztemperatur 96°C), Lichtenberg-Legierung (Schmelztemperatur 92°C).

Die Erfindung soll im Folgenden anhand von in der Zeichnung dargestellten Ausführungsbeispielen näher erläutert werden. Es zeigen:
- Figur 1: eine Musteranlage der Erfindung für einen flüssigen Einsatzstoff;
- Figur 2: eine Variation der Anlage gemäß Figur 1 für die Verwendung von festen Einsatzstoffen.

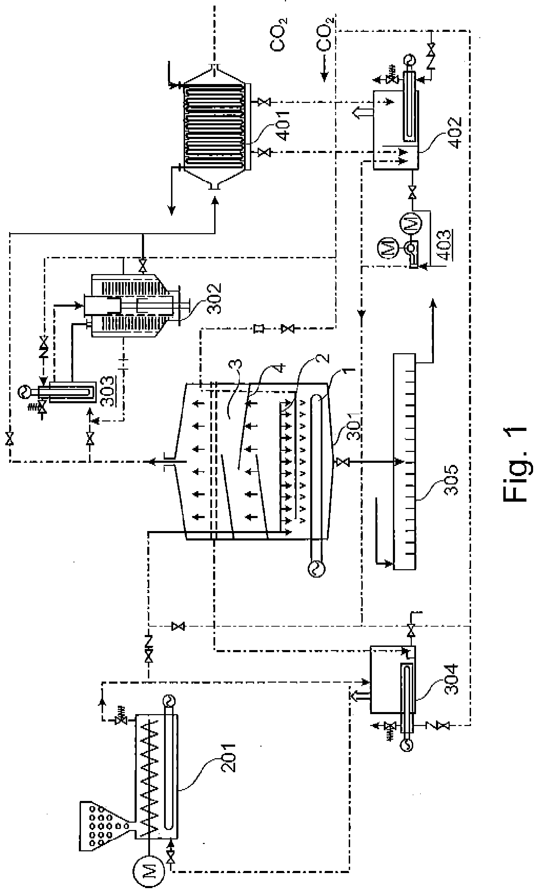

Die in Figur 1 dargestellte Anlage ist eine Anlage zur thermokatalytischen Depolymerisation von Kunststoffabfallprodukten wie z. B. polyolefine Kunststoffe. Ausgestattet ist sie mit einer Schmelzvorrichtung 201, einem Nassreaktor 301, in dem sich die Düsen 2 mit den Öffnungen befinden, über welche die geschmolzenen Einsatzstoffe, d. h. Abfallprodukte aus Polyethylen und Polypropylen PE und PP gefördert werden.

Der Reaktor ist gefüllt mit niedrigschmelzender Metalllegierung 3, die durch ein elektrisches Heizelement 1 erhitzt wird. Im Reaktor befinden sich Sperren 4, die den Durchfluss der Kunststofftröpfchen an die Reaktoroberfläche verlangsamen. Weiter ist die Anlage ausgestattet mit einem Trockenreaktor 302, einem Erhitzer 303 für die Kohlenwasserstoffdämpfe, einem Ablasstank 304, einem Ablasstank für die Legierung 305, einem Kondensator 401, einem Kondensattank 402, einer Kondensat-Dosierpumpe 403 und einem CO2-Tank. Die genannten Bestandteile der Anlage sind bekannt und werden in Anlagen dieses Typs verwendet. Die Hauptmodifikation besteht in einer neuen Konstruktion des Nassreaktors 301, in dem die Einsatzmaterialien (während des Prozesses verbrauchte Substanzen), d. h. polyolefine Abfallstoffe, erhitzt werden.

In dem Ablasstank 305 kann die Reinigung der Legierung über eine Flüssigkeitsspülung oder Einstellung der Temperatur auf ca. 100°C stattfinden.

### Beispiel

In der Anlage zur thermokatalytischen Depolymerisation von Kunststoffabfallprodukten, die Rückstände aus Polyethylen und Polypropylen enthalten, wurde eine Reaktion vorgenommen, bei der die flüssige niedrigschmelzende Legierung die Woodsche Legierung darstellte. Die zunächst geschmolzenen Abfallstoffe wurden über die im unteren Teil des Reaktors untergebrachten Düsen mit Öffnungen von 0,5 bis 1 mm Ø weiter geleitet. Das sich im Reaktor befindliche Bad aus Woodscher Legierung wurde auf einer Temperatur zwischen 400-420°C gehalten.

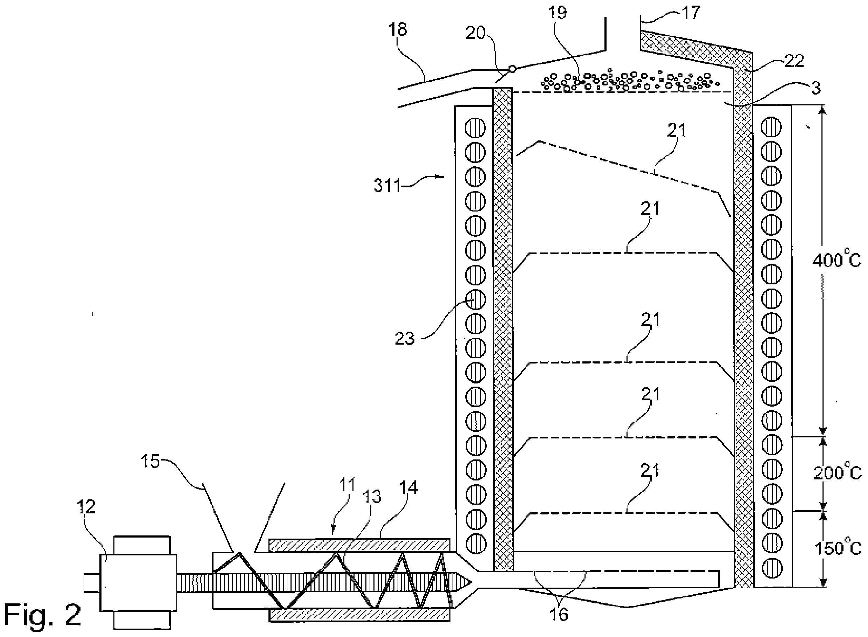

Figur 2 zeigt eine Variante eines Nassreaktors 311, der anstelle des Nassreaktors 301 in die Anlage gemäß Figur 1 einsetzbar ist, um Feststoffe als Einsatzstoffe zu behandeln. Demgemäß ist an den Boden des Reaktors 311 eine horizontal liegende Dosierförderschnecke 11 angeordnet. Ein Elektromotor 12 treibt eine Schneckenspindel 13 an, die von einem zylindrischen Gehäusemantel 14 umgeben ist. In eine Öffnung an der Oberseite des Gehäusemantels 14 befindet sich ein Einfülltrichter 15, mit dem der körnige Feststoff der Dosierschneckenpumpe 11 zuführbar ist. Über Auslassöffnungen 16 im Boden des Reaktors 311 gelangt der so vorgeförderte Feststoff in das Innere des Reaktors 311 der mit der niedrig schmelzenden Legierung gefüllt ist. Da die Feststoffe ein geringeres spezifisches Gewicht aufweisen als die Metalllegierung, steigen sie in der Metalllegierung nach oben auf. Die Feststoffe werden erhitzt, wodurch chemische oder physikalische Umsetzvorgänge stattfinden können. Soweit bei chemischen Umsetzvorgängen Gase auftreten, können diese in einer Deckenwandung des Reaktors 301 durch einen Gasauslass 17 abgeleitet werden. Unterhalb der Deckenwandung des Reaktors befindet sich ein seitlicher Auslass 18 für Feststoffe 19, die auf der Schmelze 3 über eine Auslassklappe 20 aus dem Reaktor 311 entnommen werden können.

Bei den Feststoffen 19 kann es sich um Sand handeln, der in kontaminierter Form durch die Eintrittsöffnungen 16 in die Schmelze 3 des Reaktors 311 gelangt. Die organischen Bestandteile werden durch den Einfluss der hohen Schmefzbadtemperaturen mineralisiert und in Gase umgewandelt, die durch den Gasauslass 17 aus dem Reaktor 311 geleitetet werden. An der Oberfläche der Schmelze sammeln sich die Sandkörner als Feststoffe 19 an und können in gereinigter Form aus dem Reaktor 311 ausgeschleust werden.

Handelt es sich bei den Feststoffen 19 um Kunststoffgranulat, das depolymerisiert werden soll, kann diese kontrolliert durch die Wärmeeinwirkung mittels der niedrig schmelzenden Legierung 3 umgewandelt werden. Hierfür ist es vorteilhaft, dass in dem Reaktor 311 übereinander Siebanordnungen 21 vorgesehen sind, die einerseits als Hindernisse 4 die Durchlaufzeit für die Feststoffe 19 durch das Schmelzbad 3 verlängern können, andererseits insbesondere bei der Umwandlung von Kunststoff eine automatische Steuerung der Verweilzeit für bestimmte Umsetzungsstufen bewirken, wenn sie mit nach oben zunehmend kleinerer Maschenweite ausgebildet sind. Ein Granulatkorn, das durch die Eintrittsöffnungen 16 in die Schmelze 3 eintritt und eine Größe aufweist, die größer als die Maschenweite des unteren Siebs 21 ist verbleibt unterhalb des untersten Siebs 21 solange, bis sich das Korn durch die Umsetzung soweit verkleinert hat, dass es durch das erste Sieb 21 hindurchtreten kann. Vor dem nächsten Sieb 21 bleibt das Korn solange gefangen, bis es sich wiederum ausreichend verkleinert hat, um durch die Maschenweite dieses Siebes hindurchzutreten. In gleicher Weise fungieren die übrigen Siebe 21. Bei dieser Verwendung des Reaktors 311 ist es möglich, dass durch die Eintrittsöffnungen 16 Feststoffe in Form von Kunststoffgranulaten o. ä. geleitet werden und an der Oberfläche des Schmelzbades 3 keine Feststoffe 19 mehr ankommen, sondern beispielsweise eine Flüssigkeitsschicht schwimmt, die dann durch den seitlichen Auslass 18 ebenfalls abzogen werden kann.

Der Reaktor 311 ist in dem in Figur 2 dargestellten Ausführungsbeispiel nicht mit einem Heizstab oder einer Heizschlange direkt aufgeheizt, sondern weist thermisch isolierte zylindrische Mantelwände 22 auf, die um Windungen einer elektrischen Induktionsheizung 23 angeordnet sind. Die Verwendung einer Induktionsheizung 23 für die Aufheizung der Schmelze 3 hat gegenüber der Verwendung eines direkt heizenden elektrischen Heizelements 1 im Bodenbereich des Reaktors 301, 311 den Vorteil, dass definierte Temperaturprofile einstellbar sind. Erfindungsgemäß kann es vorteilhaft sein, in einem unteren Bereich des Reaktors 311 beispielsweise eine Temperatur von 150° C einzustellen, sodass die zugeführten Einsatzstoffe in einer ersten Stufe im Schmelzbad 3 schonend aufgeheizt werden. In einer darüber liegenden Stufe kann dann eine Schmelzbadtemperatur von 200° C durch die Induktionsheizung 23 eingestellt werden. In einem oberen Bereich, der sich über mehr als die Hälfte der Höhe des Reaktors 311 erstreckt, wird in dem dargestellten Ausführungsbeispiel dann eine Temperatur von 400° C mit der Induktionsheizung 23 eingestellt. Es ist ersichtlich, dass eine derartige Temperaturschichtung mit einem im Boden angeordneten, direkt auf die Schmelze 3 wirkenden Heizelement 1 nicht realisierbar ist, da sich in diesem Fall die Wärme über die Kovektionswirkung verteilen muss und am elektrischen Heizelement 1 die Temperatur maximal ist.

Mit der Induktionsheizung 23 können so für verschiedene Anwendungsfälle unterschiedliche Temperaturprofile eingestellt werden, mit denen die gewünschten chemischen und/oder physikalischen Umsetzungen optimiert gesteuert werden können.

## Patentansprüche

1. Verfahren zur thermokatalytischen Depolymerisation von Kunststoffabfallprodukten, bei dem Einsatzstoffe erhitzt werden, wobei mit niedrigschmelzenden Metallen oder Metalllegierungen ein Schmelzbad in einem Tank oder Reaktor hergestellt wird, **dadurch gekennzeichnet, dass** die Einsatzstoffe als feste Materialien im unteren Teil des Tanks oder Reaktors direkt in das Schmelzbad eindosiert werden, wobei der automatische Fluss des Einsatzstoffes durch das Schmelzbad durch Sperrwände, spiralförmige Leitrohre oder durch Gitter verlangsamt wird, und wobei das Schmelzbad eine Temperatur zwischen 50°C und 550°C aufweist

2. Verfahren nach Anspruch 1, **dadurch gekennzeichnet, dass** das niedrigschmelzende Metall oder die niedrigschmelzende Metalliegierung mit einer Heizeinrichtung in dem Tank oder Reaktor erhitzt wird.

3. Verfahren nach Anspruch 1 oder 2, **dadurch gekennzeichnet, dass** die Dichte des Einsatzstoffes geringer ist als die Dichte des niedrigschmelzenden Metalls oder der niedrigschmelzenden Metalllegierung.

4. Anlage für die thermokatalytische Depolymerisation von Kunststoffabfallproduktenmit einem Tank oder Reaktor zur Umfassung eines Schmelzbads aus einem niedrigschmelzenden Metall oder einer niedrigschmelzenden Metalllegierung, **dadurch gekennzeichnet, dass** der Tank oder Reaktor in seinem unteren Teil mit seiner Zuführeinrichtung zur dosierten Zuführung von Einsatzstoffen als feste Materialien direkt in das Schmelzbad versehen ist, und das der Reaktor mit verlangsamenden Sperren, Gittern oder Sieben oder spiralförmigen Leitrohren versehen ist.

5. Anlage nach Anspruch 4, **dadurch gekennzeichnet, dass** der Tank oder Reaktor im unteren Teil mit einem Heizelement ausgestattet ist.

6. Anlage nach Anspruch 4 oder 5, **dadurch gekennzeichnet, dass** die Wandung des Tanks oder Reaktors mit einem zylindrischen Heizelement ausgestattet ist.

7. Anlage nach Anspruch 6, **dadurch gekennzeichnet, dass** der Tank oder Reaktor mit einer zylindrischen Induktionsheizung versehen ist.

8. Anlage nach Anspruch 6 oder 7, **dadurch gekennzeichnet, dass** die zylindrische Heizung zur Erzielung eines Temperaturgradienten über die Höhe des Tanks oder Reaktors ausgelegt ist.

## Claims

1. A method for the thermocatalytic depolymerisation of plastic waste products, during which input substances are heated, wherein a melt pool is produced in a tank or reactor using low-melting metals or metal alloys, **characterised by the fact that** the input substances are metered directly into the lower part of the tank or reactor as solid materials, with the automatic flow of the input substance throughout the melt pool being slowed down by means of barrier walls, spiral guide pipes or a lattice, and the melt pool being at a temperature of between 50°C and 550°C

2. The method according to claim 1, **characterised by** the fact that the low-melting metal or metal alloy is heated using a heating device in the tank or reactor.

3. The method according to claim 1 or 2, **characterised by** the fact that the density of the input substance is lower than the density of the low-melting metal or metal alloy.

4. A unit for the thermocatalytic depolymerisation of plastic waste products using a tank or reactor for the enclosure of a melt pool comprised of a low-melting metal or metal alloy, **characterised by the fact that** the tank or reactor is equipped with an input device in the lower part for the measured supply of input substances as solid materials directly into the melt pool, and that the reactor is equipped with barrier walls, lattices or sieves, or spiral guide pipes to slow down the substance.

5. The unit according to claim 4, **characterised by** the fact that the tank or reactor is fitted with a heating element in the lower part.

6. The unit according to claim 4 or 5, **characterised by** the fact that the wall of the tank or reactor is fitted with a cylindrical heating element.

7. The unit according to claim 6, **characterised by** the fact that the tank or reactor is equipped with a cylindrical induction heater.

8. The unit according to claim 6 or 7, **characterised by** the fact that the cylindrical heater is designed to achieve a temperature gradient above the height of the tank or reactor.

## Revendications

1. Procédé pour la dépolymérisation thermocatalytique de produits de déchets en matière plastique, dans lequel on réchauffe les produits de départ, de telle manière que l'on établit, avec des métaux ou des alliages métalliques à bas point de fusion, un bain de fusion dans un réservoir ou un réacteur,
**caractérisé en ce que** les produits de départ sont introduits de manière dosée sous forme de matériaux solides dans la partie inférieure du réservoir ou du réacteur, directement dans le bain de fusion, et l'écoulement automatique du produit de départ à travers le bain de fusion est ralenti par des parois d'obturation, par des tubes guides de forme spiralée ou par des grilles, et dans lequel le bain de fusion a une température entre 50° C et 550° C.

2. Procédé selon la revendication 1, **caractérisé en ce que** le métal à bas point de fusion ou l'alliage métallique à bas point de fusion est réchauffé au moyen d'un dispositif de chauffage dans le réservoir ou le réacteur.

3. Procédé selon la revendication 1 ou 2, **caractérisé en ce que** la densité du produit de départ est plus faible que la densité du métal à bas point de fusion ou de l'alliage métallique à bas point de fusion.

4. Installation pour la dépolymérisation thermocatalytique de produits de déchets en matière plastique, comprenant un réservoir ou un réacteur pour recevoir un bain de fusion d'un métal à bas point de fusion ou d'un alliage métallique à bas point de fusion, **caractérisé en ce que** le réservoir ou le réacteur est doté dans sa partie inférieure d'un système d'admission pour l'admission dosée de produits de départ sous forme de matériaux solides directement dans le bain de fusion, et **en ce que** le réacteur est doté de dispositifs d'obturation, de grillages ou de tamis ou encore de tubes guides de forme spiralée à fonction de ralentissement.

5. Installation selon la revendication 4, **caractérisé en ce que** le réservoir ou le réacteur est équipé d'un élément chauffant dans la partie inférieure.

6. Installation selon la revendication 4 ou 5, **caractérisé en ce que** la paroi du réservoir ou du réacteur est équipée d'un élément chauffant cylindrique.

7. Installation selon la revendication 6, **caractérisé en ce que** le réservoir ou le réacteur est doté d'un chauffage à induction cylindrique.

8. Installation selon la revendication 6 ou 7, **caractérisé en ce que** le chauffage cylindrique est conçu pour atteindre un gradient de température sur la hauteur du réservoir ou du réacteur.
